Europäisches Patentamt

European Patent Office

Office européen des brevets

(19)

(11) **EP 1 291 938 A2**

(12) **EUROPÄISCHE PATENTANMELDUNG**

(43) Veröffentlichungstag:
   **12.03.2003  Patentblatt 2003/11**

(51) Int Cl.⁷: **H01M 2/16**

(21) Anmeldenummer: **02009348.0**

(22) Anmeldetag: **03.05.2002**

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(30) Priorität: **07.09.2001  DE 10143898**

(71) Anmelder: **Carl Freudenberg KG
   69469 Weinheim (DE)**

(72) Erfinder:
   • **Wenneis, Wolffried, Dr.
     68161 Mannheim (DE)**
   • **Hoffmann, Harald, Dr.
     69221 Dossenheim (DE)**
   • **Severich, Birgit, Dr.
     68519 Viernheim (DE)**
   • **Keul, Helmut, Dr. rer.nat.
     52074 Aachen (DE)**

(54) **Alkalische Zelle oder Batterie**

(57)    Die Erfindung betrifft eine alkalische Zelle oder Batterie mit mindestens einer positiven und einer negativen Elektrode, die durch einen Separator getrennt sind und sich zusammen mit einem alkalischen Elektrolyten in einem Gehäuse befinden, wobei der Separtor ein Vliesstoff, eine mikroporöse Folie oder ein Gewebe aus einem oder mehreren Polymeren ist, die durch Copolymerisation oder Propfung mittels reaktiver Extrusion gebildet sind und funktionelle Gruppen im Molekül besitzen oder im alkalischen Elektrolyt bilden, die als Lewis-Säuren wirksam sind.

EP 1 291 938 A2

Printed by Jouve, 75001 PARIS (FR)

**Beschreibung**

Die Erfindung betrifft eine alkalische Zelle oder Batterie, mit mindestens einer positiven und einer negativen Elektrode, die durch einen Separator getrennt sind und sich zusammen mit einem alkalischen Elektrolyten in einem Gehäuse befinden.

Alkalische Batterien oder Zellen müssen ein Separatorenmaterial besitzen, die generell folgende Eigenschaften haben:

1. Beständigkeit gegen den Elektrolyten,
2. Beständigkeit gegen Oxydation,
3. hohe mechanische Stabilität,
4. geringe Dickentoleranz,
5. geringen Ionendurchgangswiderstand,
6. einen hohen Elektronendurchgangswiderstand,
7. ein Rückhaltevermögen für von den Elektroden abgelöste Feststoffpartikel,
8. permanente Benetzbarkeit durch den Elektrolyten und
9. ein hohes Speichervermögen für die Elektrolytflüssigkeit.

Je nach dem eingesetzten Polymer, aus dem der Separator hergestellt ist, weisen die entsprechenden Separatormaterialien jedoch verschiedene Vor- und Nachteile auf. So sind beispielsweise Separatoren aus Polyolefinen sehr gut widerstandsfähig gegen den chemischen Angriff durch stark alkalische Elektrolyten und gegen Oxydation im chemischen Umfeld der Zellen, die Benetzbarkeit durch den alkalischen Elektrolyten ist jedoch schlecht. Polyamid ist dagegen immer ausreichend gut benetzbar, jedoch ist seine Hydolysebeständigkeit besonders bei höheren Temperaturen nicht ausreichend.

In den Dokumenten DE-A 2 164 901, DE-A 1 142 924, DE-A 2 203 167 und DE-A 2 438 531 sind Separatoren aus Polyamid und/oder Polyolefinen beschrieben. Zur Erhöhung der Benetzbarkeit von Polyolefinfasern sind schon verschiedene Verfahren vorgeschlagen worden. So offenbaren die Dokumente DE-A 31 16 738 und EP-A 0 625 805 eine Plasmabehandlung von Polyolefinen und die Dokumente JP-A 61/19056, JP-A 2/276154 sowie DE-A 195 23 231 Fluorierungsverfahren von Polyolefinen. Das Dokument EP-A 593 612 beschreibt ein Verfahren zur Oberflächenmodifizierung von Polyolefinen durch naßchemische Aufpfropfung eines Vinylmonomeren. Zur Oberflächenmodifizierung von Separatoren aus Polyolefinen ist es weiterhin aus dem Dokument EP-A 316916 bekannt, Polyolefine in Oleum zu sulfonieren.

Beim Einsatz im Nickel-/Metallhydrid- oder Nickel-/Cadmium-Akkumulatoren kommt dem Separator eine weitere Aufgabe zu. Solche Akkumulatoren zeigen den Nachteil einer beschleunigten Selbstentladung. Die Elektronen werden langsam im Inneren der Zellen von der negativen Cadmium- oder Metallhydridelektrode zur positiven Nickeloxydelektrode transportiert und stehen dann nicht mehr für externe Verbraucher zur Verfügung. Die Zelle entlädt sich langsam von selbst auch im Ruhezustand. Bei extremer Tiefenentladung können dabei in manchen Fällen Elektroden unbrauchbar werden, was zum Totalverlust des Akkumulators führt.

Als Mechanismus für diese unerwünschte Selbstentladung werden Stickstoffverbindungen diskutiert, die durch Reduktion an der negativen Elektrode und durch Oxydation an der positiven Elektrode für den Transport den Elektronen verantwortlich sind. Die entsprechenden Reaktionen sind am Beispiel der Reaktionsgleichung für einen Nickel-/Metallhydrid-Akkumulator nachstehend dargelegt:

$$\text{Negative Elektrode } NO_3^- + MH_x \rightarrow NO_2^- + MH_{x-2} + H_2O$$

$$NO_2^- + MH_{x-2} \rightarrow NH_3 + MH_{x-8} + OH^- + H_2O$$

$$\text{Positive Elektrode } NH_3 + 6\,NiOOH + H_2O + OH^- \rightarrow 6\,Ni(OH)_2 + NO_2^-$$

$$NO_2^- + 2\,NiOOH + H_2O \rightarrow Ni(OH)_2 + NO_3^-$$

Die Erfindung hat sich die Aufgabe gestellt, alkalische Zellen oder Batterien anzugeben, bei denen das eingesetzte Separatorenmaterial die Selbstentladung vermindert oder unterdrückt.

Erfindungsgemäß wird die Aufgabe durch eine gattungsgemäß angegebene alkalische Zelle oder Batterie gelöst, bei der der Separator ein Vliesstoff, eine mikroporöse Folie oder ein Gewebe aus einem oder mehreren Polymeren ist, die durch Copolymerisation oder Propfung mittels reaktiver Extrusion in der Masse funktionalisiert sind und funktionelle Gruppen im Molekül besitzen oder im alkalischen Elektrolyt bilden, die als Lewis-Säuren wirksam sind. Die erfindungsgemäß eingesetzten Polymeren sind im Gegensatz zu den aus dem Stand der Technik bekannten Materialien nicht durch naßchemische Oberflächenmodifizierung funktionalisiert.

Besonders bevorzugt ist ein Separator der mindestens 0,1 mmol $NH_3$/g Separatormasse, vorzugsweise jedoch 0,2 mmol $NH_3$/g und ganz besonders bevorzugt mindestens 0,4 mmol $NH_3$/g Separatormasse bindet.

Erfindungsgemäß wird ein Separator eingesetzt, der durch Copolymerisation oder Propfung mittels reaktiver Extrusion eines Polyolefins, Polystyrens, Polyphenylensulfids, Polysulfon oder Mischungen daraus in der Masse funktionalisiert ist.

Besonders bevorzugt ist weiterhin, dass die den Separator bildenden Polymere nach einer Lagerung in 30%iger Kalilauge über einen Zeitraum von 3 Tagen bei einer Temperatur von 40°C ein mittels Röntgen-Photoelektronen-Spektroskopie (XPS) ermitteltes Kohlenstoff/Sauerstoffverhältnis (C/O-Verhältnis) < 10, vorzugsweise < 8 und ganz besonders bevorzugt < 5 besitzen.

Für die Bestimmung des Ammoniakbindevermögens wird folgendes Verfahren eingesetzt:

Etwa 2 g des als Separatormaterial vorgesehenen Ausgangspolymeren werden in 120 ml 8 molarer Kalilauge (KOH) unter Zusatz von 5 ml 0,3 molaren Ammoniaks ($NH_3$) 3 Tage lang bei 40°C gelagert. Zwei Blindproben ohne Ausgangspolymer werden gleichzeitig angesetzt. Nach der Lagerung werden eventuelle ölige Abscheidungen mit Filterpapier von der Oberfläche aufgenommen und entfernt. Von den ursprünglich 125 ml des Ansatzes wird eine Teilmenge von 100 ml entnommen und das Ammoniak daraus mit Hilfe einer Wasserdampfdestillation in 150 ml destilliertes Wasser, dass mit 10 ml 0,1 molarer Salzsäure (HCl) und einigen Tropfen Methylrot als Indikator versetzt ist, übergetrieben. Die Säure wird anschließend mit 0,1 normaler Natronlauge (NaOH) zurücktitriert.

Die Erfindung wird nachfolgend anhand mehrerer Beispiele näher erläutert.

**Beispiel 1**

Aus einem statistischen Copolymeren aus Polyethylen und einem aliphatischen Polyketon mit einem XPS C/O-Verhältnis von 9,24 wurden durch Extrusion aus der Schmelze Stapelfasern gefertigt. Auf einer Krempelmaschine wurde aus diesen Fasern, die einen Titer von 2 dtex und eine Schnittlänge von 38 mm haben, ein Faservlies mit einem Gewicht von 80 g/m$^2$ hergestellt. Dieses Vlies wurde dann thermisch punktförmig verschweißt, wobei die einzelnen quadratischen Schweißpunkte eine Kantenlänge von 0,48 mm aufwiesen und ein Quadratzentimeter der entstandenen Vliesstoffoberfläche 48 Schweißpunkte enthielt. Die verschweißten Flächen haben bezogen auf die Gesamtfläche des Vliesstoffseparators einen Anteil von 11 %. Die Dicke des entstandenen Separatorenmaterials wurde mit 0,41 mm gemessen. Das Ammoniakbindevermögen beträgt 0,32 mmol $NH_3$ pro g Separator.

**Beispiel 2**

Aus einem statistischen Copolymeren aus Polyethylen und einem aliphatischen Polyketon mit einem XPS C/O-Verhältnis von 9,24. wurden durch Extrusion aus der Schmelze Stapelfasern gefertigt. Auf einer Krempelmaschine wurde aus diesen Fasern, die einen Titer von 1,3 dtex und eine Schnittlänge von 38 mm hatten, ein Faservlies mit einem Gewicht von 70 g/m$^2$ hergestellt. Dieses Vlies wurde mit Hilfe der Wasserstrahlvernadelung verfestigt. Nach dem Trocknen wurde bei dem dabei entstandenen Vliesstoffseparatorenmaterial eine Dicke von 0,35 mm gemessen. Anschließend wurde das Material zwischen Stahlwalzen mit einer Temperatur von 100°C auf eine Dicke von 0,22 mm kalandiert. Das Ammoniakbindevermögen beträgt 0,32 mmol $NH_3$ pro g Separator.

**Beispiel 3**

Aus einem Pfropfcopolymeren aus Maleinsäureanhydrid und Polypropylen, das durch reaktive Extrusion hergestellt wurde, und ein XPS C/O-Verhältnis von 5,21 besitzt, wurden durch Extrusion aus der Schmelze Stapelfasern gefertigt. Auf einer Krempelmaschine wurde dann aus einem Gemisch von 50 % dieser Fasern, die einen Titer von 1,3 dtex und eine Schnittlänge von 38 mm hatten, und aus 50 % einer Polyolefinfaser, deren Fasersubstanz zu 1/3 aus Polypropylen im Kern und zu 2/3 Polyäthylen in der Hülle bestand und einen Titer von 3,3 dtex und eine Schnittlänge von 64 mm aufwiesen, ein Faservlies mit einem Gewicht von 55 g/m$^2$ hergestellt. Dieses Vlies wurde dann in einem Ofen bei einer Temperatur von 145°C erhitzt, wobei der Polyäthylenmantel der einen Faserkomponente schmolz. Das aufgeheizte Vlies wurde zwischen zwei Walzen gepreßt und dabei abgekühlt. Dabei wurden die Fasern an deren Kreuzungspunkten miteinander verklebt. Das dabei entstandene Separatorenmaterial hatte eine Dicke von 0,19 mm. Das Ammoniakbindevermögen beträgt 0,10 mmol $NH_3$ pro g Separator.

**Beispiel 4**

Aus wurden einem statistischen Copolymeren aus Polyethylen und einem aliphatischen Polyketon mit einem XPS C/O-Verhältnis von 9,24 durch Extrusion aus der Schmelze Stapelfasern gefertigt. Auf einem Hydroformer einer Naßvliesanlage wurde dann eine wässrige Suspension einer Fasermischung von 70 % dieser Fasern, die einen Titer von 1,0 dtex und eine Schnittlänge von 5 mm hatten, und aus 30 % einer Polyolefinfaser, deren Fasersubstanz zu 1/3 aus Polypropylen im Kern und zu 2/3 Polyäthylen in der Hülle bestand und einen Titer von 0,8 dtex und eine Schnittlänge von 5 mm aufwiesen, ein Faservlies mit einem Gewicht von 43 g/m$^2$ hergestellt. Dieses Vlies wurde dann in einem Ofen bei einer Temperatur von 145°C erhitzt, wobei der Polyäthylenmantel der einen Faserkomponente schmolz. Das aufgeheizte Vlies wurde zwischen zwei Walzen gepreßt und dabei abgekühlt. Dabei wurden die Fasern an deren Kreuzungspunkten miteinander verklebt. Das dabei entstandene Separatorenmaterial hatte eine Dicke von 0,14 mm. Das Ammoniakbindevermögen beträgt 0,22 mmol $NH_3$ pro g Separator.

**Beispiel 5**

Auf einer Spinnvliesanlage wurde nach dem bekannten Meltblownverfahren aus einem Pfropfcopolymeren aus Acrylsäure und Polypropylen, dass durch reaktive Extrusion hergestellt wurde, und ein XPS C/O-Verhältnis von 3,76 besitzt, ein Vliesstoff aus sehr feinen Fasern hergestellt. Die dabei entstandenen Fasern hatten im Mittel einen Durchmesser von 7 μm und eine unregelmäßige Faserlänge. Das dabei entstandene Vliesstoffseparatorenmaterial hatte ein Gewicht von 40 g/m$^2$ und eine Dicke von 0,19 mm. Das Ammoniakbindevermögen beträgt 0,54 mmol $NH_3$ pro g Separator.

**Vergleichsbeispiel**

Aus 50 % einer Polyolefinfaser, deren Fasersubstanz zu 1/3 aus Polypropylen im Kern und zu 2/3 Polyäthylen in der Hülle besteht, wurde auf einer Krempelmaschine im Gemisch mit 50 % Polypropylenfasern, die einen Titer von 2 dtex und eine Schnittlänge von 38 mm hatten, und einen Titer von 3,3 dtex und eine Schnittlänge von 64 mm aufwiesen, ein Separatorenmaterial mit einem Gewicht von 55 g/m$^2$ hergestellt. Dieses Vlies wurde dann in einem Ofen bei einer Temperatur von 145°C erhitzt, wobei der Polyäthylenmantel der einen Faserkomponente schmolz. Das aufgeheizte Vlies wurde zwischen zwei Walzen gepresst und dabei abgekühlt. Dabei wurden die Fasern an deren Kreuzungspunkten miteinander verklebt. Das dabei entstandene Separatorenmaterial hatte eine Dicke von 0,20 mm. Das Seaprtorenmaterial zeigt im XPS ein C/O-Verhältnis von 32. Das Ammoniakbindevermögen beträgt < 0,0089 mmol $NH_3$ pro g Separator.

**Patentansprüche**

1. Alkalische Zelle oder Batterie mit mindestens einer positiven und einer negativen Elektrode, die durch einen Separator getrennt sind und sich zusammen mit einem alkalischen Elektrolyten und einem Gehäuse befinden, **dadurch gekennzeichnet, dass** der Separator ein Vliesstoff, eine mikroporöse Folie oder ein Gewebe aus einem oder mehreren Polymeren ist, die durch Copolymerisation oder Pfropfung mittels reaktiver Extrusion gebildet sind und funktionelle Gruppen im Molekül besitzen oder im alkalischen Elektrolyt bilden, die als Lewis-Säuren wirksam sind.

2. Alkalische Zelle oder Batterie nach Anspruch 1, **dadurch gekennzeichnet, dass** der Separator mindestens 0,1 mmol $NH_3$/g bindet.

3. Alkalische Zelle oder Batterie nach Anspruch 1 oder 2, **dadurch gekennzeichnet, dass** der Separator mindestens 0,2 mmol $NH_3$/g bindet.

4. Alkalische Zelle oder Batterie nach einem der Ansprüche 1 bis 3, **dadurch gekennzeichnet, dass** der Separator mindestens 0,4 mmol $NH_3$/g bindet.

5. Alkalische Zelle oder Batterie nach einem der Ansprüche 1 bis 4, **dadurch gekennzeichnet, dass** der Separator aus einem Material besteht, das durch Copolymerisation oder Propfung mittels reaktiver Extrusion eines Polyolefins, Polystyrens, Polyphenylensulfids, Polysulfons oder Mischungen daraus in der Masse funktionalisiert ist.

6. Alkalische Zelle oder Batterie nach einem der Ansprüche 1 bis 5, **dadurch gekennzeichnet, dass** das den Separator bildende Polymer nach einer Lagerung in 30%iger Kalilauge über einen Zeitraum von 3 Tagen bei einer Temperatur von 40°C ein mittels Röntgen-Photoelektronen-Spektroskopie (XPS) ermitteltes Kohlenstoff/Sauerstoff C/O — Verhältnis <10 besitzt.

7. Alkalische Zelle oder Batterie nach Anspruch 6, **dadurch gekennzeichnet, dass** das Polymer ein C/O — Verhältnis <8 besitzt.

8. Alkalische Zelle oder Batterie nach Anspruch 6 oder 7, **dadurch gekennzeichnet, dass** das Polymer ein C/O — Verhältnis <5 besitzt.